# EUROPEAN PATENT SPECIFICATION

(11) **EP 2 331 768 B1**
(45) Date of publication and mention of the grant of the patent: **27.03.2013**
(21) Application number: 09783721.5
(22) Date of filing: 05.10.2009
(51) Int. Cl.: A01G 1/00, E04D 11/00, E04F 15/024

(54) **ROOF WITH MODULAR PLANT COVERING**
DACH MIT MODULARER VEGETATIONSABDECKUNG
TOIT AVEC COUVERTURE VÉGÉTALE MODULAIRE

(30) Priority: 06.10.2008 EP 08165911
(43) Date of publication of application: 15.06.2011
(73) Proprietor: Dang Vu, Toan, 4031 Liège (BE); Hermans, M. Marc, 1190 Bruxelles (BE)
(72) Inventor: Dang Vu, Toan, 4031 Liège (BE); Hermans, M. Marc, 1190 Bruxelles (BE)
(74) Representative: Vandeberg, Marie-Paule L.G.
(86) International application number: PCT/EP2009/062873
(87) International publication number: WO 2010/040701

(56) References cited:
- WO-A-2007/112145
- WO-A-2007/119986
- DE-A1- 3 734 334
- DE-U1- 9 408 936
- GB-A- 2 347 152
- JP-A- 2008 184 796
- US-A1- 2005 229 535
- US-A1- 2007 079 547

## Description

### Field of the invention

The invention relates to roofs covered with a plant mat commonly called "green roofs", and to a method of producing such a roof.

### Introduction

This type of roof is now becoming increasingly successful, mainly because of its economic and ecological advantages. In particular it increases the quality of thermal insulation of the roof on which it has been placed, and provides a verdant corner in the most urbanized dwellings.

However, in practice, this somewhat idyllic view of green roofs faces a series of particularly awkward practical problems which mean that, in particular, insurance companies either refuse to insure the buildings thus fitted, or increase the premiums relating thereto.

The main argument that weighs against the use of green roofs is the risk of damaging the sealing layer of the roofs and, when such a problem appears, the difficulty of finding it and remedying it.

### Prior art

WO 2007/112145, which can be considered as the nearest prior art, describes a system for covering a roof with the aid of trays filled with nutritional substrate resting on longitudinal ribs and secured together. The essential problem of this type of covering is that the trays rest directly on the sealing layer, and that it therefore eventually involves a high risk of damaging the sealing layer because of problems of differential expansion and a rapid accumulation of plant debris blocking the means of rainwater drainage. This, combined with the fact that the trays are placed following the slope of the roof, means that the collected water is of very poor quality.

Moreover, the trays are difficult to move because of their system of assembly. The precise location of any leak is therefore excessively difficult.

US-2005/120656 describes a modular tray made of galvanized steel designed to be placed on the roofs.

EP-0 267 367 describes a modular tray for the growing of plants, that can be used as a roof covering. The bottom of this tray comprises raised peaks in order to ensure water retention. Here also, there is the problem of rapid damage to the sealing layer.

US-2007/0079547 also describes a modular system, in which the downward growth of rootlets is prevented by the addition of a mat impregnated with copper hydroxide. This system however does not solve the location of possible leaks.

WO-2007/119986 describes a roof with a double structure: the apex of the roof (weight-bearing structure) sustains, via a system of base elements, a complex superstructure, theoretically watertight, formed of assembled panels. Planting may be carried out on this sealed superstructure. In practice, such a solution only shifts to the superstructure the problems associated with a green roof. Any defect in the leakproof structure inevitably causes water to run toward a - not sealed - service space extending between the weight-bearing structure and the superstructure. The superstructure also constitutes a real danger in the event of a storm: it risks being blown off because of the vacuum due to the wind.

### Summary of the invention

A first object of the invention is to solve the problems associated with the possible damage to the sealing layer.

Another object of the invention is to make it easier to locate and easily repair possible leaks.

Another object of the invention is to allow the easy rearrangement of the covered roof.

Another object of the invention is to allow the easy passage of ducts and cables.

Another object of the invention is to make it possible to draw off the accumulated heat in the event of heavy insulation.

The subject of the invention is a system for covering a roof with a plant mat comprising a series of modular trays placed in an adjacent manner. This system comprises base elements comprising a head of adjustable height capable of resting on a roof that is substantially flat and covered with a sealing layer; a grating formed of grating elements placed in an adjacent manner on these base elements and supporting the modular trays; the modular trays furnished with a vertical funnel and comprising a polygonal bottom pierced with calibrated holes and upwardly extending sides; reversible interlocking means for interlocking the trays via the sides, placed on at least two opposite sides.

The base elements are advantageously furnished with means for angular adjustment of flatness, such as, for example, a swivel system.

Advantageously, the modular trays have, in plan, an essentially square shape.

The means for interlocking the modular trays are advantageously elastic interlocking reliefs arranged on the outer sides of the trays.

The bottom of the modular trays is preferably corrugated and the calibrated holes are situated at the high points of these corrugations.

The modular trays advantageously have cropped or rounded corners.

Certain modular trays may advantageously be furnished with a vertical stack for air circulation.

The modular trays are advantageously prefilled at the factory with a substrate for vegetation, and even prestocked with vegetation.

Another subject of the invention is a method for covering a sealed roof with a plant mat comprising the following operations:
- geometric recording of the roof to be covered;
- determination of a layout plan;
- installation of height-adjustable base elements comprising a head;
- leveling of the heads of the base elements so that these heads determine at least one common plane;
- placement of grating elements placed in an adjacent manner on the heads of these base elements;
- adjacent placement of modular trays comprising a polygonal bottom pierced with calibrated holes and substantially flat sides on the surface of the grating; at least one modulas tray being furnished with a vertical funnel
- reversibly securing each modular tray with at least two of the adjacent trays;
- anchoring the at least one modular tray through its vertical funnel to the corresponding grating element;
- managing a ventilated space separating plants from the sealing layer, so that possible root lets dry out and their progression is stopped;
- causing the ventilated air space extending beneath the grating to communicate with the outside air (advantageously by arrangement of at least two stacks).

According to a first advantageous embodiment, the base elements are placed on a roof that is substantially horizontal.

According to another advantageous embodiment, the base elements are placed on an inclined roof, the height of the base elements being stepped so that the heads of these base elements determine a plurality of common horizontal planes stepped in terraces.

### Brief description of the figures

These aspects and other aspects of the invention will be clarified in the detailed description of particular embodiments of the invention, reference being made to the drawings of the figures, in which:
Fig. 1 is a schematic view in section, in elevation, of a roof according to the invention
Fig. 2 is a plan view, with successive cutaways, of the system of Fig. 1, illustrating the various steps in installing the system.
Fig. 3 is a view of another embodiment, given as an example.
Fig. 4 is a schematic view in section, in elevation, of a covering system comparable to Fig. 1, with insulation.
Fig. 5 is a schematic view in section, in elevation, of a particular embodiment for the planting of large-dimension plants.
Fig. 6 is a schematic view in section, in elevation, of a detail of a tray of the invention.
Fig. 7 is a schematic view in section, in perspective, of another detail of a particular embodiment
The figures are not necessarily drawn to scale. Usually, similar elements are marked with similar reference numbers in the figures.

### Detailed description of particular embodiments

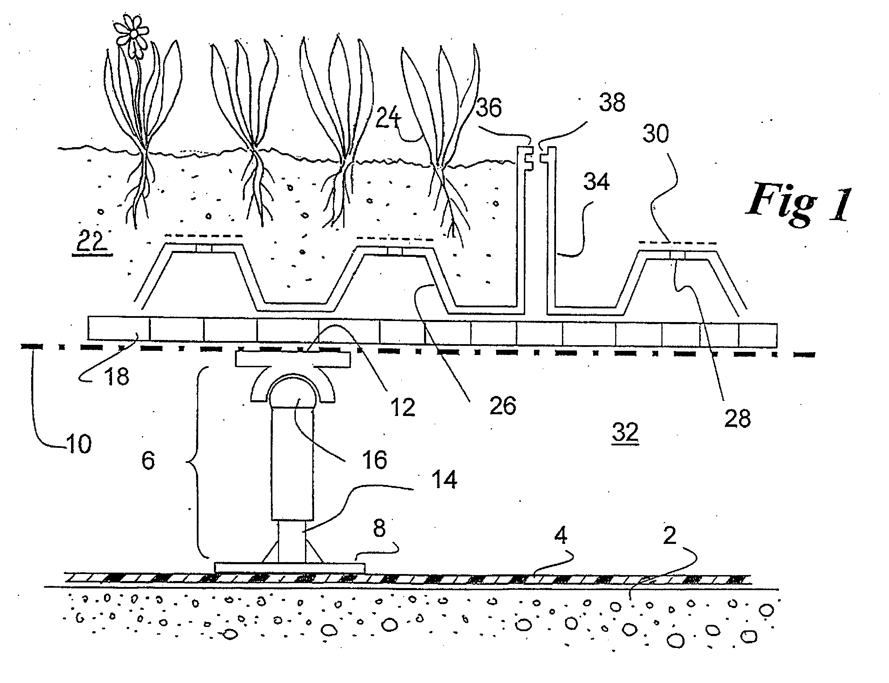

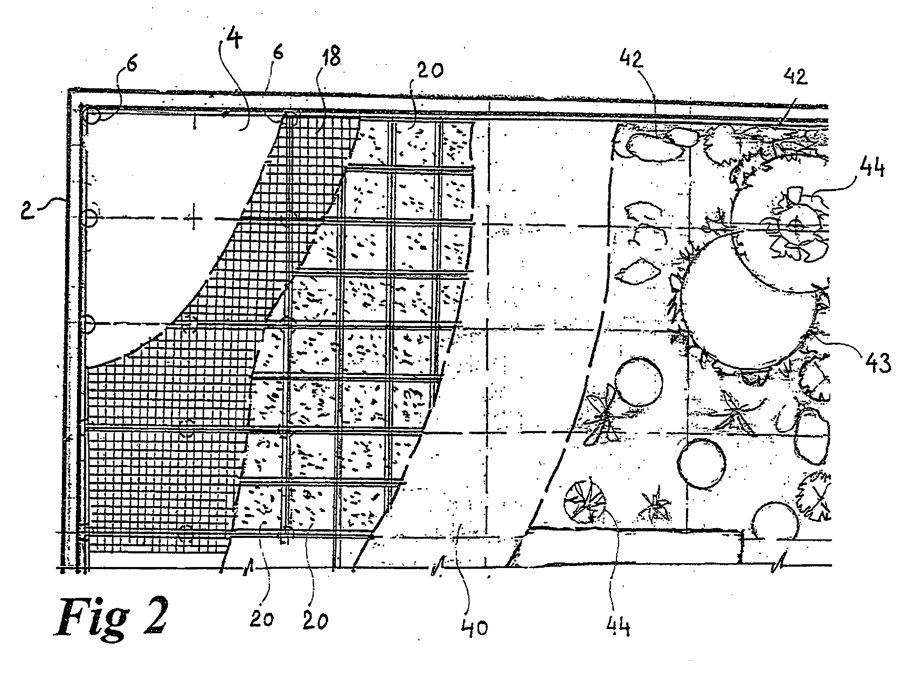

The description will be given with reference first of all to Figs. 1 and 2 which illustrate both the system and its application.

It begins with a flat initial roof usually formed of a concrete shell 2. This roof is covered with a sealing layer 4 consisting of a continuous polymer coating, roofing, with a layer of zinc, etc. which it is essential to protect from any damage (friction, piercing or other damages). For this purpose, after the precise dimensions of the roof to be covered have been determined, a calculation of the layout of the various modular elements forming the system is made at the factory or in a workshop. The layout makes it possible to calculate the number of modular shapes, squares for example, necessary to cover a given surface area.

Base elements 6 are then distributed, depending on the plan obtained and the loads to be absorbed, over the whole roof to be covered. This distribution is not critical, because at this stage positioning differences are perfectly tolerated.
The base elements 6 offer a large base 8 so as to prevent punching holes in the sealing layer and so as to distribute the weight they support over a large surface area. Then, for example with the aid of a laser level, a reference plane 10 is established and the heads 12 of all the base elements 6 are adjusted. The latter are furnished with an adjustment element 14 (in this instance, a thread) making it possible to change its height, and a means for angular adjustment of flatness 16 (in this instance a swivel 16). Then grating elements 18 are placed on the base elements 6. The prior adjustment of the heads 12 to the reference plane and the presence of the swivels 16 ensure a perfect flatness of the grating 18, irrespective of the initial state of flatness of the roof 2 (an important advantage).

The grating 18 is preferably a grid, for example made of galvanized steel, or any other durable element satisfying the standards and specifications (polymer, impregnated wood, etc.), allowing the water to flow freely and capable of withstanding the weight of the green roof, the volume of rainwater and the operating loads such as maintenance, wind, snow, etc. which may furthermore be determined precisely by calculation.

One of the advantages associated with the use of a metal grating is that such a grating contributes to the electromagnetic "shielding" of the building (the Faraday cage effect).

After the grating 18 has been installed, there comes the placing, according to the preestablished layout plan, of trays 20 containing a substrate 22 for vegetation, or even already provided with vegetation 24. The weight of the modular trays 20 and their dimensions are calculated so that they can be handled by one man. Typically, the trays 20 are squares with sides of 30 to 50 cm. The advantage of this system is that, up to installation, all the elements that it comprises may be produced in the workshop or at the factory, that is to say sheltered from the atmospheric elements and benefiting from maximum ergonomic surroundings (working surfaces at convenient height, sophisticated tools within reach). This gives a modularity and a degree of industrialization of close to 95% of the elements of the system. This also saves time during installation: great ease and speed of use of the elements that are positioned in the dry without particular tools or technology.

It will be noted that this standardization affects only the elements forming the base and that it leaves total freedom of expression to the owner of the building concerned or to its garden designer.

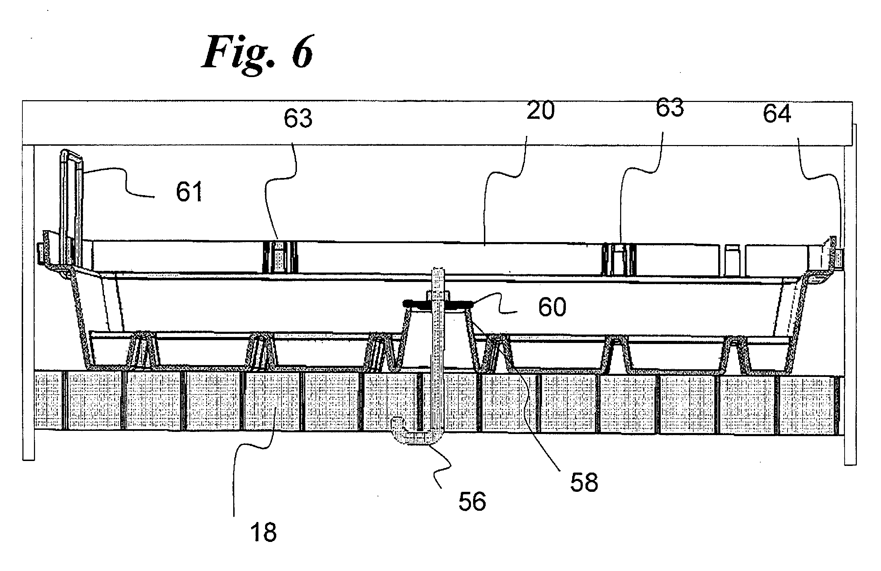

The trays 20 comprise a corrugated bottom 26, pierced with openings 28 designed to drain away the surplus of rainwater. These holes 28 are covered with a textile sheet 30 (felt, canvas, tulle, etc.) filtering the particles of substrate that are likely to be carried away. The holes 28 are placed on the upper portion of the corrugations of the bottom, so as always to leave in the hollows a reserve of humidity favoring the development of the vegetation 24. The calibration of the holes 28 makes it possible, in the event of sudden storm showers, to slow down the passage of the excess water, thereby producing a buffer effect. For this reason, the water thus collected is not poured directly into the drainage system, but released progressively, as happens (or as should happen) in nature. Consequently, it is possible to limit the dimensions of a reservoir-buffer required by certain authorities in the drainage systems of certain buildings. If there were to be a downpour defying all predictions, a very simple system for bypassing the calibrated holes is also provided: it is possible in particular to design the modular trays with rounded corners or even cropped corners. According to another option, secondary holes 29 may be arranged in the upper portion of the side walls of the trays so as to serve as an overflow in the event of heavy rain. These holes may simultaneously be used for handling the trays, if necessary with the aid of an appropriate tool 31 (see Fig. 6). In this way, if the water level tends to pass over the top of the modular trays, the excess water finds natural drainage paths which make it possible to carry it directly to the service space 32 through the grating.

One of the essential features of the present system relates to the presence, beneath the modular trays, of a service space 32, the advantages of which will be revealed below. Care is taken, during installation, to arrange at least one inlet and one outlet for the air trapped in this service space 32. To do this, it is possible either to leave empty spaces in the mesh network of the trays 20, or to incorporate trays comprising a preformed stack placing the service space 32 in communication with the outside air. This produces an outlet for excessive heat during heatwaves, because of the air circulation in the underlying service space. This ventilated space moreover improves the heat insulation of the building both in summer (increased comfort for the apartments beneath the roof and possible reduced air-conditioning costs) and in winter (reduced heating costs by restricting the rate of ventilation of the service space).

One advantage associated with the design of the service space is that it promotes turbulent air flows in this service space resulting in good evacuation of heat during summer. The presence of automatic watering (sometimes legally obligatory) contributes to an evaporation-transpiration effect, a means of economic and natural air conditioning.

This therefore gives an excellent ecology rating for the assembly and total recyclability of the materials used. Specifically, the trays can be made of recyclable plastics such as polypropylene or high density polyethylene.

Another advantage of this ventilated service space 32 is that it completely separates the plants from the sealing layer. Specifically, it is known, with conventional systems, that rootlets manage to grow through the openings or interstices between the trays, searching for nutrient elements. Coming into contact with the sealing layer, these rootlets take advantage of the slightest weakness in the structure of this layer to insert themselves therein, drilling holes. In the case of the invention, on reaching the ventilated space 32 (furthermore swept by turbulent air flows, as indicated above), these rootlets dry out and their progression is stopped. It is therefore possible, without problems, to include in the plant covering 24 of the system of the invention varieties of plants with a root system that is more "aggressive" than with conventional roof coverings. Consequently, the architect or landscaper can envisage more original designs.

Moreover, it is known, in the conventional systems, that the substrate and organic debris progressively accumulates beneath the trays and/or in line with the lines at which they join. This debris forms an ideal support for new roots and rootlets. In the case of the system of the invention, such debris falling into the service space is easily carried away during the first shower to a low point of the original roof.

It will be noted moreover that, although the roof itself, by definition, must comprise a "low point" which allows the rainwater or irrigation water to drain away, it is essential that the grating is placed on a strictly horizontal reference plane. Specifically, in this case, the water percolates vertically through the substrate layer and thereby contributes to active urban depollution.

Urban pollution (CO₂, sulfurated compounds, nitrogenous compounds) is particularly well absorbed via rain by a certain number of plants well known to specialists. Vertical percolation associated with a high rate of oxygenation (from above as well as via the service space) constantly purifies the air drawn through the substrate.

The water drawn vertically itself undergoes optimal filtration (with no bypass due to run-off). The water thus filtered has a lower pollution coefficient and consequently reduces the work of the wastewater treatment plants.

Another known disadvantage of the conventional green coverings lies in the impossibility of precisely locating any leaks, and, even more so, of repairing them. Specifically, in the event of a leak, the water can meander wherever it wants beneath the trays and appear suddenly at a point very distant from the leak. Consequently, it is necessary to move a large number of elements in order to carry out the repair. Consequently, a good number of "water damage" insurers refuse to ensure buildings with a green roof. The situation is entirely different in the case of the system of the invention. Because of the use of base elements, the risk of leaks is drastically reduced. Moreover, the "thermal break" engendered by the ventilated space reduces the temperature differences, and consequently the stresses due to expansion to which the sealing layer is subjected. Finally, in the event of a leak, it is sufficient to move the modular trays 20 situated in line with the defect that is found and the corresponding grating elements 18 in order to gain direct and easy access to the sealing layer.

The design of the present system also gives it improved sound-insulation qualities via the solid-space-solid decoupling effect.

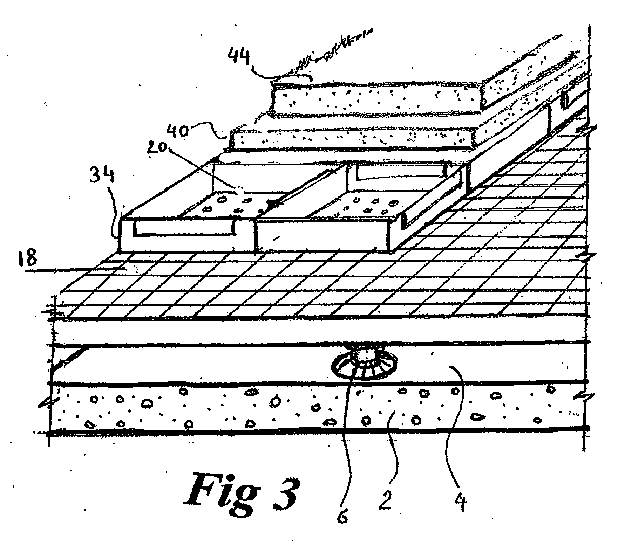

Because of the (relative) lightness of the structure of the system of the invention, the trays must be fixed together in order to withstand the wind, and even tornadoes (in the event of a tornado, a vacuum is created which literally sucks the roof elements upward). In most of the existing systems, the trays are secured by screws, eye-bolts or other elements, which means that removal tools have to be used. It is usually a burdensome job, all the metal parts usually being rusted and corroded after a prolonged period in a wet substrate. In the present case, use is preferably made of assembly by elastic interlocking or reversible clipping. Such an assembly is shown schematically in Fig. 1. The facing sides 34 of a square tray 20 each comprise two protrusions determining between them a groove 36. The other two facing sides 34 comprise a rib 38. When two trays have to be juxtaposed, one of the trays is pivoted through 90°, so that the rib 38 of the side 34 of one nests in the groove 36 of the other. One by one, each tray is then fixed to its four neighbors. Therefore the system forms a single rigid surface (advantageous against being torn by the wind, maintenance, etc.). If it is desired to extract one particular tray 20 from this mesh network, it is sufficient to slightly separate, with the aid of a simple tool such as a screwdriver, the sides 34 of this tray in order to disconnect them from their neighbors. The corners of each tray having no interlocking protrusions 36, 38 allow a sufficient reserve of elasticity to make this operation a sinecure. It goes without saying that other methods of securing the trays may be used, such as, in particular, via U-shaped sections, or, as shown in Fig. 3, an inverted U-shaped gusset plate.

This system allows the installation of a green roof on a surface inclined up to 10%. With such a slope, due to using adjustable base elements, it is further possible to envisage a terraced arrangement with no problems.

Another advantage associated with the ease of removing the trays 20 is the extreme versatility of the system, which can be rearranged in a few days, according to the taste of its owner: rapid inclusion of any type of plant, substrate and additional layer (flowers, bamboo, stones, etc.). The compositions and possibilities are infinite.

Through the additional presence of the ventilated space 32, used this time as a service space, it also allows the later installation of the greatest variety of additional elements such as solar sensors, lights, ponds and even swimming pools, decorative elements, automatic watering, terraces, micro wind turbines, etc. The presence of a service space specifically makes it possible to easily run and maintain easy access to the cables, pipework, etc. required by these various accessories. Moreover the ventilated space can be accessed without great difficulty by raising a single tray, because of the simplicity of the fixing system. To run pipes or cables to precise points of emergence, it is possible to provide in the bottom of the trays openings to be pushed in, the sealing of the trays being in this case preserved by the use of compression glands, according to a technique well known to those skilled in the art.

It will be noted that, once the basic structure is installed, it is possible to at least partly sacrifice ease of access to the ventilated space and add an additional layer of substrate 40, decorative elements 42, which may comprise a pool 43 and a more voluminous plant covering 44 above the trays 20, as shown in Fig. 2, in order to obtain a design with a more marked relief, undulating, etc.

Despite such variants, the decisive advantage of the system of the invention lies in the difference between a "ready-to-lay" modular green roof and a system laboriously constructed on site.

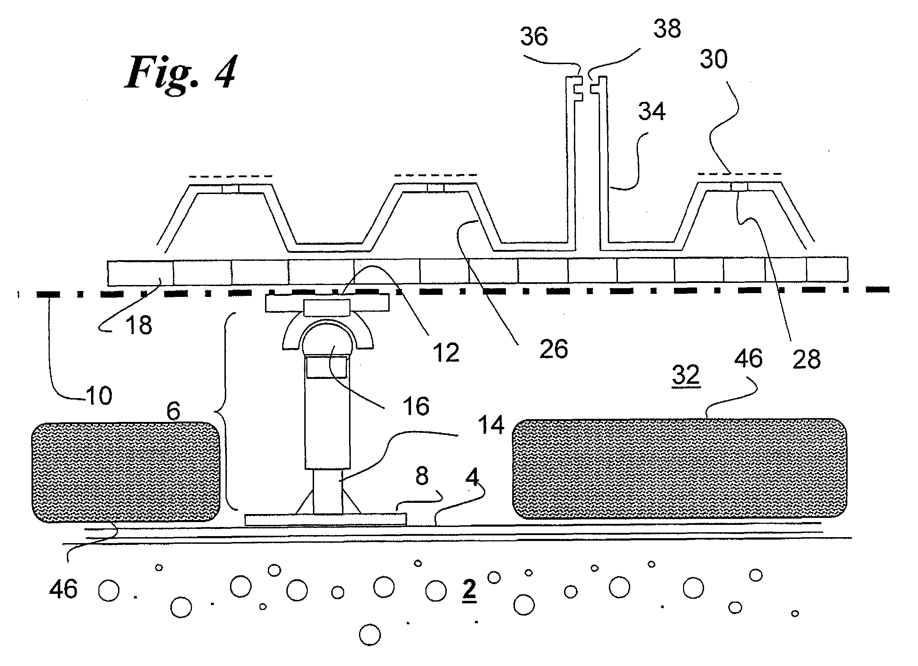

Fig. 4 shows another advantageous possibility conferred by the system and the method of the invention.

Because of the presence of the ventilated space, it is not possible, in the calculations of the thermal coefficient of the wall, to take account of the materials situated above the ventilated space: the ventilated space is considered as having the same temperature as the outside ambient air. However, the system described here makes it possible to very easily improve the insulation of an existing building. It is sufficient, before the grating is installed, to place above the sealing layer 4 insulating plates 46 made of a damp-resistant material such as cellular glass, or other equivalent material. The heat losses due to the water run-off beneath these plates should be considered negligible relative to the gain provided by the plates, even not joined together. In addition, these plates 46 remain easy to move in the event of a search for a defect in the sealing layer.

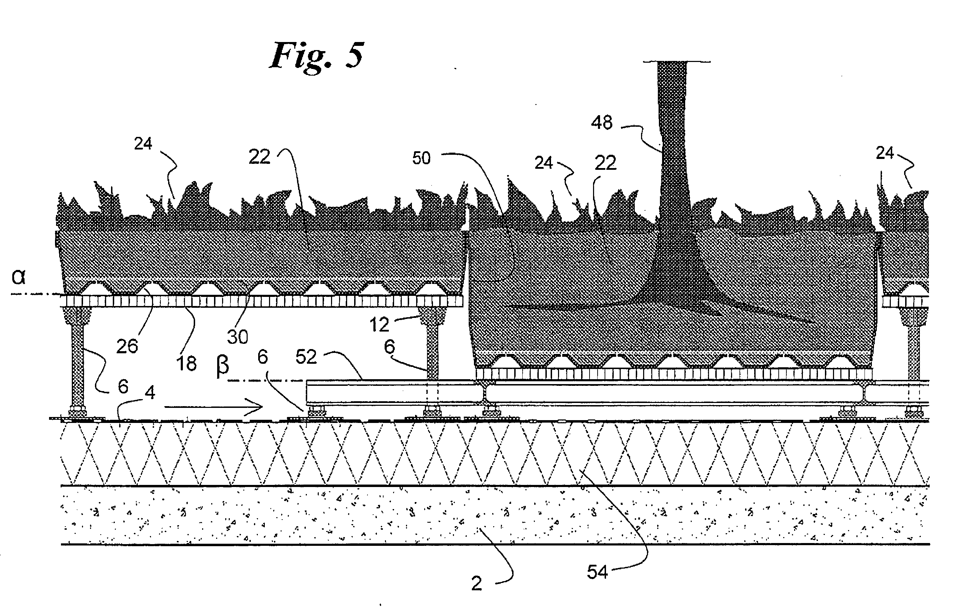

Fig. 5 shows that it is possible, with the device of the invention, to install, problem-free, plants with a large vertical extension (bushes, shrubs and even small trees). Such an installation would be dangerous and even impossible with a system as described, for example, in WO-2007/119986. Specifically, in the event of high winds, the force applied to the branches and foliage would subject the tray in which such a plant was installed, and by ricochet the whole superstructure, to a particularly damaging torsional moment. Since, in the system of the invention, the grating 18 is not watertight, it may be placed in two distinct planes α and β, as shown in Fig. 5, which makes it possible to provide one or more deeper trays 50 placed beneath a grating 18 placed in a first reference plane α. This or these grating elements may therefore be anchored or ballasted separately (in the example shown in Fig. 5, joists 52 have been used both as anchoring and ballasting elements).

The advantage of this arrangement is to (1) hide the stabilization device, and (2) prevent having to place a thicker uniform layer of earth likely to form a permanent extra load.

It will be noted also that Fig. 5 shows an embodiment in which the roof 2 supporting the device is covered externally with an insulating layer 54 supporting the sealing layer 4.

The same principle of distinct reference planes (α, β) makes it possible to produce terraced "gardens" on an inclined roof.

Fig.6 displays two details of the invention, including an anchoring system fastening the trays to the grating by hooks 56, in the case of particularly strong winds. A hook 56 with threatened shank is inserted through a funnel 58 placed at the center of a tray. It is then fastened by a nut pressing a washer 60 sufficiently wide to seal the funnel 58.

This very simple system allows a very quick fastening/unfastening of the trays (the hooks can be mounted afterwards in the funnels). Fig. 6 also displays removable handles 61 allowing an easy handling and removal of the trays. L-shaped elastic spacers 63 resiliently maintain a tiny space (about 1 mm) between the trays 20, so as to take into account the dilatation factor of the material of the trays 20. Trays can so withstand without damages temperature changes of about 50°C.

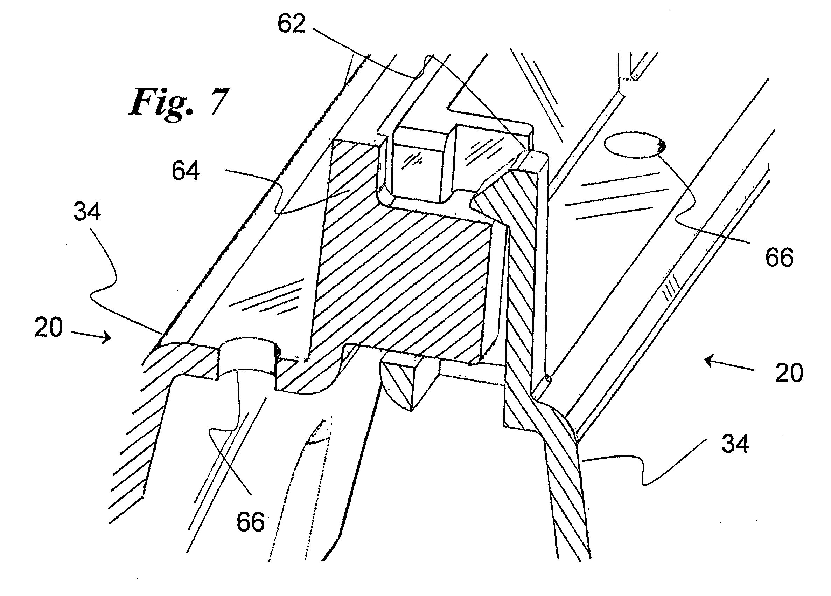

Fig. 7 is a detailed view of another embodiment of fastening means for fastening together two adjacent trays. A resilient locking strip 62 (easily displaced by a screwdriver) holds a male strip 64 inserted in a female slide. Through-holes 66 allow insertion of removable handles as displayed at Fig. 6.

Without departing from the scope of the invention as described in the appended claims, it will be evident to those skilled in the art that the present invention is not limited to the examples illustrated and described above. The invention comprises each of the novel features and their combination. The presence of reference numbers may not be considered as limiting. The use of the term "comprises" may in no manner exclude the presence of elements other than those mentioned. The use of the indefinite article "a" to introduce an element does not exclude the presence of a plurality of these elements. The present invention has been described with reference to specific embodiments which have a purely illustrative value and must not be considered to be limiting.

## Claims

1. A system for covering a roof with a plant mat comprising a series of modular trays (20) comprising a polygonal bottom and upwardly extending sides (34), placed in an adjacent manner, **characterized in that** it comprises
- base elements (6) comprising a head of adjustable height capable of resting on a roof that is substantially flat, covered with a sealing layer;
- an unsealed grating (18) formed of grating elements placed in an adjacent manner on these base elements (6) and supporting the modular trays (20);
- reversible interlocking means (36, 38) for interlocking the modular trays (20);
- a ventilated space (32) separating plants from the sealing layer, so that plant rootlets dry out and their progression is stopped;
- modular trays (20) furnished with a vertical funnel;
the modular trays (20) being pierced with calibrated holes (28).

2. The covering system as claimed in claim 1, **characterized in that** the base elements (6) comprise means for angular adjustment of flatness (16).

3. The covering system as claimed in claim 2, **characterized in that** the means for angular adjustment of flatness (16) are a swivel system (16).

4. The covering system as claimed in any one of claims 1 to 3, **characterized in that** the modular trays (20) have, in plan, an essentially square shape.

5. The covering system as claimed in any one of the preceding claims, **characterized in that** the reversible means for interlocking the modular trays are protrusions (36, 38) arranged on the outer sides (34) of the trays.

6. The covering system as claimed in any one of the preceding claims, **characterized in that** the bottom (26) of the modular trays (20) is corrugated, the calibrated holes (28) being situated at the high points of these corrugations.

7. The covering system as claimed in any one of the preceding claims, **characterized in that** the modular trays have cropped or rounded corners.

8. The covering system as claimed in any one of the preceding claims, **characterized in that** the modular trays are prefilled with a substrate (22) for vegetation.

9. The covering system as claimed in claim 8, **characterized in that** the substrate of the modular trays is prestocked with vegetation (24).

10. The covering system as claimed in any one of the preceding claims, **characterized in that** it comprises grating elements placed below a reference plane (α) on which the other grating elements are placed.

11. The covering system as claimed in any one of the preceding claims, **characterized in that** thermally insulated plates (46) insensitive to humidity are placed above the sealing layer (4) of the roof (2).

12. A method for covering a sealed roof with a plant mat comprising the following operations:
- geometric recording of the roof (2) to be covered;
- determination of a layout plan;
- installation of height-adjustable base elements (6) comprising a head;
- leveling of the heads (12) of the base elements (6) so that these heads (12) determine at least one common plane (10) ;
- placement of grating elements (18) placed in an adjacent manner on the heads (12) of these base elements;
- adjacent placement of modular trays (20) comprising a polygonal bottom (26) pierced with calibrated holes (28) and upwardly extending sides (34) on the surface of the grating (18), at least one modular tray (20) being furnished with a vertical funnel;
- securing by reversible elastic interlocking each modular tray (20) with at least two of the adjacent trays (20) ;
- anchoring the at least one modular tray (20) through its vertical funnel to the corresponding grating element (18);
- managing a ventilated space (32) separating plants from the sealing layer, so that possible rootlets dry out and their progression is stopped;
- causing the ventilated air space extending beneath the grating to communicate with the outside air.

13. The method for covering a roof as claimed in claim 12, **characterized in that** the base elements (6) are placed on a roof that is substantially horizontal.

14. The method for covering a roof as claimed in claim 12, **characterized in that** the base elements (6) are placed on an inclined roof, the height of said base elements being stepped so that the heads (12) of said base elements determine a plurality of common horizontal planes stepped in terraces.

## Patentansprüche

1. System zum Decken eines Daches mit einer Pflanzenunterlage, umfassend eine Reihe modularer Wannen (20) mit vieleckigem Boden und aufwärts ragenden Seiten (34), die aneinander angrenzend angeordnet sind, **dadurch gekennzeichnet, dass** es Folgendes umfasst:
- Basiselemente (6) mit einem höhenverstellbaren Kopf, die imstande sind, auf einem Dach, das im Wesentlichen flach und mit einer Dichtungsschicht gedeckt ist, aufzuliegen;
- ein unversiegeltes Gitterwerk (18), das von Gitterelementen gebildet wird, die aneinander angrenzend auf den Basiselementen (6) angeordnet sind und die modularen Wannen (20) tragen;
- lösbare Verriegelungsmittel (36, 38) zum Verriegeln der modularen Wannen (20);
- einen belüfteten Raum (32), der Pflanzen von der Dichtungsschicht trennt, so dass Wurzelfasern der Pflanzen austrocknen und ihr weiteres Wachstum verhindert wird;
- modulare Wannen (20), die mit einem vertikalen Schacht ausgestattet sind; wobei die modularen Wannen (20) mit kalibrierten Löchern (28) perforiert sind.

2. Decksystem nach Anspruch 1, **dadurch gekennzeichnet, dass** die Basiselemente (6) Mittel zum winkelmäßigen Anpassen der Flachheit (16) umfassen.

3. Decksystem nach Anspruch 2, **dadurch gekennzeichnet, dass** die Mittel zum winkelmäßigen Anpassen der Flachheit (16) ein Schwenksystem (16) sind.

4. Decksystem nach einem der Ansprüche 1 bis 3, **dadurch gekennzeichnet, dass** die modularen Wannen (20) in der Draufsicht eine im Wesentlichen viereckige Form haben.

5. Decksystem nach einem der vorhergehenden Ansprüche, **dadurch gekennzeichnet, dass** die lösbaren Mittel zum Verriegeln der modularen Wannen Vorsprünge (36, 38) sind, die auf den Außenseiten (34) der Wannen angeordnet sind.

6. Decksystem nach einem der vorhergehenden Ansprüche, **dadurch gekennzeichnet, dass** der Boden (26) der modularen Wannen (20) gewellt ist, wobei die kalibrierten Löcher (28) auf den Spitzen dieser Wellungen angeordnet sind.

7. Decksystem nach einem der vorhergehenden Ansprüche, **dadurch gekennzeichnet, dass** die modularen Wannen gekröpfte oder abgerundete Ecken haben.

8. Decksystem nach einem der vorhergehenden Ansprüche, **dadurch gekennzeichnet, dass** die modularen Wannen mit einem Substrat (22) für eine Pflanzendecke vorgefüllt sind.

9. Decksystem nach Anspruch 8, **dadurch gekennzeichnet, dass** das Substrat der modularen Wannen mit einer Pflanzendecke (24) vorausgestattet ist.

10. Decksystem nach einem der vorhergehenden Ansprüche, **dadurch gekennzeichnet, dass** es Gitterelemente umfasst, die unter einer Referenzebene (α) angeordnet sind, auf der die anderen Gitterelemente angeordnet sind.

11. Decksystem nach einem der vorhergehenden Ansprüche, **dadurch gekennzeichnet, dass** feuchtigkeitsunempfindliche Wärmedämmplatten (46) über der Dichtungsschicht (4) des Daches (2) angeordnet sind.

12. Verfahren zum Decken eines versiegelten Daches mit einer Pflanzenunterlage, umfassend folgende Schritte:
- geometrisches Erfassen des zu deckenden Daches (2);
- Ermitteln eines Anordnungsplanes;
- Anbringen von höhenverstellbaren Basiselementen (6), die einen Kopf aufweisen;
- Nivellieren der Köpfe (12) der Basiselemente (6), so dass die Köpfe (12) wenigstens eine gemeinsame Ebene (10) festlegen;
- Anordnen von Gitterelementen (18) in aneinander angrenzender Weise auf den Köpfen (12) der Basiselemente;
- aneinander angrenzendes Anordnen von modularen Wannen (20) mit vieleckigem Boden (26), der mit kalibrierten Löchern (28) perforiert ist, und aufwärts ragenden Seiten (34) auf der Oberfläche des Gitterwerks (18), wobei wenigstens eine modulare Wanne (20) mit einem vertikalen Schacht ausgestattet ist;
- Befestigen durch lösbares elastisches Verriegeln jeder modularen Wanne (20) mit wenigstens zwei der angrenzenden Wannen (20);
- Verankern der wenigstens einen modularen Wanne (20) durch ihren vertikalen Schacht am entsprechenden Gitterelement (18);
- Schaffen eines belüfteten Raumes (32), der Pflanzen von der Dichtungsschicht trennt, so dass mögliche Wurzelfasern austrocknen und ihr weiteres Wachstum verhindert wird;
- Sicherstellen, dass der belüftete Raum, der sich unter dem Gitterwerk erstreckt, mit der Außenluft verbunden ist.

13. Verfahren zum Decken eines Daches nach Anspruch 12, **dadurch gekennzeichnet, dass** die Basiselemente (6) auf einem Dach angeordnet sind, das im Wesentlichen horizontal ist.

14. Verfahren zum Decken eines Daches nach Anspruch 12, **dadurch gekennzeichnet, dass** die Basiselemente (6) auf einem geneigten Dach angeordnet sind, wobei die Höhe der Basiselemente so gestuft ist, dass die Köpfe (12) der Basiselemente mehrere gemeinsame horizontale Ebenen, die in Terrassen gestuft sind, festlegen.

## Revendications

1. Système de recouvrement d'une toiture par un tapis végétal comprenant une série de bacs modulaires (20) comprenant un fond polygonal et des flancs (34) s'étendant vers le haut, disposés de façon jointive, **caractérisé en ce qu'**il comprend
- des éléments de piétement (6) comprenant une tête de hauteur ajustable aptes à reposer sur un toit en substance plan recouvert d'une couche d'étanchéité ;
- un caillebotis (18) non étanche formé d'éléments de caillebotis disposé de façon jointive sur ces éléments de piétement (6) et supportant les bacs modulaires (20) ;
- des moyens d'emboîtement réversibles (36, 38) des bacs modulaires (20) ;
- un espace ventilé (32) séparant des plantes de la couche d'étanchéité, de sorte que des radicelles des plantes sèchent et que leur progression est arrêtée ;
- des bacs modulaires (20) munis d'une cheminée verticale ;
les bacs modulaires (20) étant percés de trous calibrés (28).

2. Système de recouvrement selon la revendication 1, **caractérisé en ce que** les éléments de piétement (6) comprennent des moyens d'ajustement angulaire de planéité (16).

3. Système de recouvrement selon la revendication 2, **caractérisé en ce que** les moyens d'ajustement angulaire de planéité (16) sont un système à rotule (16).

4. Système de recouvrement selon l'une quelconque des revendications 1 à 3, **caractérisé en ce que** les bacs modulaires (20) ont, en plan, une forme essentiellement carrée.

5. Système de recouvrement selon l'une quelconque des revendications précédentes, **caractérisé en ce que** les moyens d'emboîtement réversible des bacs modulaires sont des reliefs (36, 38) ménagés sur les flancs extérieurs (34) des bacs.

6. Système de recouvrement selon l'une quelconque des revendications précédentes, **caractérisé en ce que** le fonds (26) des bacs modulaires (20) est ondulé, les orifices calibrés (28) étant situés aux points hauts de ces ondulations.

7. Système de recouvrement selon l'une quelconque des revendications précédentes, **caractérisé en ce que** les bacs modulaires ont des coins coupés ou arrondis.

8. Système de recouvrement selon l'une quelconque des revendications précédentes, **caractérisé en ce que** les bacs modulaires sont préremplis d'un substrat (22) pour végétation.

9. Système de recouvrement selon la revendication 8, **caractérisé en ce que** le substrat des bacs modulaires est prégarni de végétation (24).

10. Système de recouvrement selon l'une quelconque des revendications précédentes, **caractérisé en ce qu'**il comprend des éléments de caillebottis disposés en contrebas d'un plan de référence (α) suivant lequel sont disposés les autres éléments de caillebottis.

11. Système de recouvrement selon l'une quelconque des revendications précédentes, **caractérisé en ce que** des plaques thermiquement isolantes (46) insensibles à l'humidité sont disposées au-dessus de la couche d'étanchéité (4) du toit (2).

12. Procédé de recouvrement d'une toiture étanche par un tapis végétal comprenant les opérations suivantes :
- relevé géométrique de la toiture (2) à recouvrir ;
- détermination d'un plan de calepinage ;
- mise en place d'éléments de piétement (6) de hauteur ajustable comprenant une tête ;
- mise à niveau des têtes (12) des éléments de piétement (6) de façon à ce que ces têtes (12) déterminent au moins un plan commun (10) ;
- pose d'éléments de caillebotis (18) disposés de façon jointive sur les têtes (12) de ces éléments de piétement ;
- pose jointive de bacs modulaires (20) comprenant un fond polygonal (26) percé de trous calibrés (28) et des flancs (34) s'étendant vers le haut sur la surface du caillebotis (18), au moins un bac modulaire (20) étant muni d'une cheminée verticale ;
- solidarisation par emboîtement élastique réversible de chaque bac modulaire (20) avec au moins deux des bacs (20) adjacents ;
- ancrage de l'au moins un bac modulaire (20) au moyen de sa cheminée verticale sur l'élément de caillebottis correspondant (18) ;
- aménagement d'un espace de ventilation (32) séparant les plantes de la couche d'étanchéité, de sorte que des radicelles éventuelles sèchent et que leur progression est arrêtée ;
- mise en communication de l'espace d'air ventilé s'étendant sous le caillebottis avec l'air extérieur.

13. Procédé de recouvrement d'une toiture selon la revendication 12, **caractérisé en ce que** les éléments de piètement (6) sont disposés sur un toit (2) qui est en substance horizontal.

14. Procédé de recouvrement d'une toiture selon la revendication 12, **caractérisé en ce que** les éléments de piètement (6) sont disposés sur un toit (2) incliné, la hauteur de ces éléments de piètement étant échelonnées de façon à ce que les têtes (12) de ces éléments de piètement déterminent une pluralité de plans horizontaux communs échelonnés en terrasses.
